(19) Europäisches Patentamt
European Patent Office
Office européen des brevets

(11)  **EP 2 944 508 B1**

(12)  **FASCICULE DE BREVET EUROPEEN**

(45) Date de publication et mention
de la délivrance du brevet:
**15.03.2017   Bulletin 2017/11**

(51) Int Cl.:
***B60N 2/48*** *(2006.01)*  ***B60N 2/10*** *(2006.01)*
***B60N 2/22*** *(2006.01)*  ***B60N 2/44*** *(2006.01)*
***B60N 2/02*** *(2006.01)*

(21) Numéro de dépôt: **15167801.8**

(22) Date de dépôt: **15.05.2015**

(54)  **SIÈGE DE VÉHICULE**

FAHRZEUGSITZ

VEHICLE SEAT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **15.05.2014   FR 1454351**

(43) Date de publication de la demande:
**18.11.2015   Bulletin 2015/47**

(73) Titulaire: **Zodiac Actuation Systems
89000 Auxerre (FR)**

(72) Inventeur: **Nivet, Laurent
91190 Gif sur Yvette (FR)**

(74) Mandataire: **Cabinet Plasseraud
66 rue de la Chaussée d'Antin
75440 Paris Cedex 09 (FR)**

(56) Documents cités:
**WO-A1-2010/056193     US-A1- 2013 062 921
US-A1- 2014 217 792**

**Description**

La présente invention concerne un siège, notamment de véhicule du type comportant au moins un premier et un second éléments mobiles l'un par rapport à l'autre et au moins un actionneur assurant un mouvement relatif entre les deux éléments, comportant un capteur de mesure d'une information représentative de la position d'un premier élément de siège par rapport à un second élément de siège.

Les sièges d'avion sont couramment équipés de nombreux éléments mobiles les uns par rapport aux autres sous l'action d'actionneurs commandés électriquement. Afin d'assurer le confort des passagers, et s'assurer que le siège ne vienne pas heurter des éléments de la cabine tel que le sol, le siège comprend un calculateur propre à déterminer en continu la position de certains points particuliers du siège et notamment des points extrêmes de celui-ci.

Afin d'assurer ce calcul, chaque actionneur est équipé d'un capteur permettant de connaitre sa position. Ce capteur est formé par exemple d'un potentiomètre ou d'une roue codeuse. Il est disposé entre deux parties mobiles de l'actionneur.

A partir de la position de chaque actionneur et de la connaissance de la géométrie du siège, le calculateur détermine la position de chaque élément du siège et de points particuliers de celui-ci.

Cette solution nécessite de disposer d'un capteur dans chaque actionneur, ce qui complique la structure de l'actionneur. Ces capteurs sont généralement sources d'usures pour l'actionneur.

De plus, il est nécessaire de calibrer les capteurs de position des actionneurs après montage de l'actionneur sur le siège, et notamment dans le cas d'actionneurs rotatifs, afin d'associer une position particulière du capteur de l'actionneur à une position de référence de l'élément de siège commandé par l'actionneur.

Le procédé de calibration est relativement complexe et augmente le temps de fabrication et de mise en service du siège.

De plus, le calcul dans l'espace de la position d'une extrémité d'un élément du siège est lié à la position d'un ou plusieurs actionneurs et à leurs liaisons dans le siège. Chaque modification mécanique des liaisons d'un actionneur oblige à reconsidérer complètement la façon de calculer la position de cette extrémité de l'élément concerné. Ceci impose de longs temps de développement lors d'adaptations à différentes mécaniques de siège.

De même, certains sièges possèdent une élasticité mécanique de ses différents éléments. Ceci ne permet pas de connaitre la position réelle de ses extrémités à partir de la position de chaque actionneur. Une position d'un actionneur correspond à un angle sur l'élément du siège concerné sans charge. Une charge appliquée sur le siège peut changer l'angle de cet élément par élasticité de cet élément sans changement de position de l'actionneur concerné. Les mesures fournies sont donc imprécises.

Le document US-A-2013/062921 montre un siège de véhicule comportant des éléments mobiles avec un capteur de mesure d'information.

L'invention a pour but de proposer un siège de véhicule permettant d'éviter les inconvénients résultant de la présence d'un capteur de position dans l'actionneur disposé entre deux parties mobiles de l'actionneur.

A cet effet, l'invention a pour objet un siège du type précité, caractérisé en ce que ledit capteur comprend un inclinomètre solidarisé au premier élément de siège et en ce que ladite information représentative de la position du premier élément de siège est une inclinaison du premier élément de siège.

Selon un mode particulier de l'invention, le siège comporte lui-même plusieurs des caractéristiques suivantes :

- le capteur est relié à l'unité de traitement d'informations pour fournir une information d'inclinaison relative par rapport à une référence commune ;
- il comporte un capteur d'inclinaison de référence comportant des moyens de correction de la valeur de chaque capteur d'inclinaison à partir de l'inclinaison de référence ;
- les premier et second éléments de siège sont successifs dans le siège, le premier élément de siège étant porté et mobile directement par rapport au second élément de siège, les premier et second éléments de siège comportent chacun un capteur d'inclinaison, chaque capteur d'inclinaison étant relié à ladite unité de traitement d'informations pour fournir à celle-ci une inclinaison relative du premier élément de siège par rapport au second élément de siège ; et
- au moins un élément de siège, déplaçable par rapport à un autre élément de siège en translation, comporte un accéléromètre propre à mesurer l'accélération relative entre les deux éléments de siège ainsi que des moyens de calcul de la position relative des deux éléments de siège par double intégration par rapport au temps de l'accélération mesurée.

L'invention sera mieux comprise à la lecture de la description qui va suivre, donnée uniquement à titre d'exemple et faite en se référant aux dessins, sur lesquels :

- la figure 1 est une vue schématique d'un siège de véhicule selon l'invention, monté dans un avion en phase de vol normal ; et

**EP 2 944 508 B1**

- la figure 2 est une vue identique à celle de la figure 1, d'un autre mode de réalisation de l'invention.

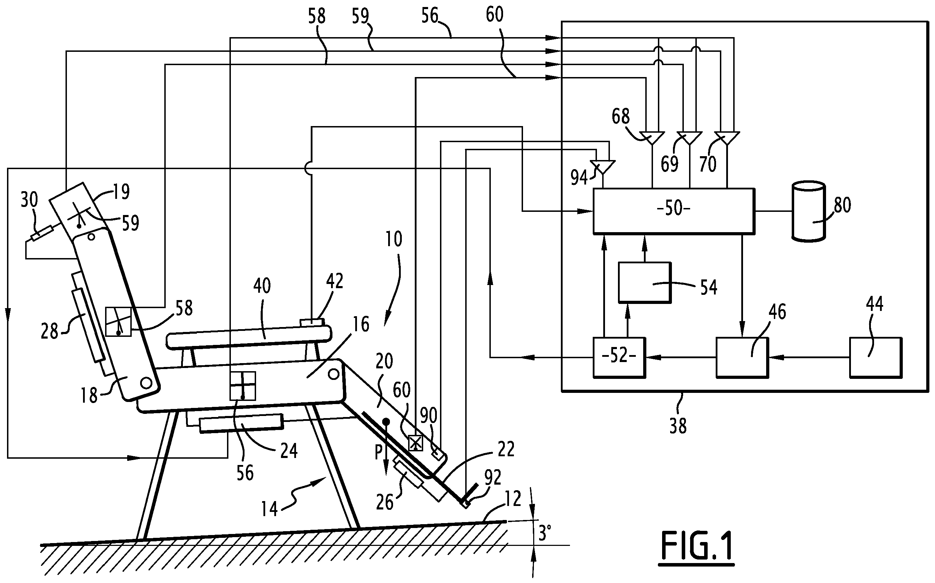

Le siège 10 représenté sur la figure 1 est un siège de passager d'un avion. Ce siège est fixé sur le sol 12 de l'avion. L'avion est supposé en phase de vol normal, de sorte que le sol 12 de l'avion forme un angle de +3° avec l'horizontale.

Le siège comporte un piétement 14 solidaire du sol 12 sur lequel repose une assise 16 sensiblement parallèle au sol de l'avion. A une extrémité de l'assise est articulé un dossier 18 au sommet duquel est articulé un repose-tête 19.

A l'autre extrémité de l'assise 16, est articulé un repose-jambes 20 déplaçable entre une position rabattue sensiblement perpendiculaire au sol au-dessous de l'assise 16 et une position étendue sensiblement parallèle au sol dans le prolongement de l'assise 16.

Le siège 10 comporte en outre un repose-pieds 22 monté déplaçable à coulissement par rapport au repose-jambes 20 dans le prolongement de celui-ci.

Le repose-pieds 22 est déplaçable en translation entre une position escamotée à l'intérieur du repose-jambes 20 et une position étendue dans laquelle il prolonge celui-ci et est pratiquement totalement sorti.

Un actionneur électrique 24 est monté entre l'assise 16 et le repose-jambes 20 afin d'assurer un déplacement de ce dernier entre sa position rabattue et sa position étendue.

De même, un actionneur électrique 26 est interposé entre le repose-jambes 20 et le repose-pieds 22. Deux autres actionneurs 28, 30 sont interposés respectivement entre l'assise 16 et le dossier 18, d'une part, et entre le dossier 18 et le repose-tête 19, d'autre part.

Chaque actionneur 24 à 30 est alimenté en courant électrique depuis une unité 38 de gestion du fonctionnement du siège.

En outre, le siège comporte un accoudoir 40 sur lequel est fixé un clavier de commande 42 permettant la commande des actionneurs 24 à 30 afin de provoquer un déplacement de l'élément qu'il commande.

Le clavier de commande 42 est relié à l'unité 38 de gestion du fonctionnement du siège.

L'unité 28 comporte une source 44 d'alimentation de l'actionneur. Cette dernière est formée par exemple d'un transformateur relié au réseau d'alimentation électrique générale de l'avion par des moyens de connexion adaptés.

En outre, une interface d'alimentation 46 assurant l'alimentation de chaque actionneur 24 à 30 est prévue en sortie de la source d'alimentation 44. Cette interface assure la mise en forme du courant d'alimentation de l'actionneur en fonction du sens d'actionnement et de la vitesse de déplacement souhaités.

L'interface d'alimentation 46 est pilotée par une unité centrale de traitement d'informations 50. Cette unité 50 est reliée au clavier de commande 42, afin de recueillir les ordres de commande de l'utilisateur.

Pour le fonctionnement du siège, l'unité centrale de traitement d'informations 50 met en oeuvre un programme connu en soi adapté afin de commander l'interface d'alimentation 46 pour que celle-ci assure l'alimentation des actionneurs dans un sens ou dans l'autre par inversion du sens de courant, en fonction des informations reçues depuis le clavier 42.

Selon l'invention, certains éléments mobiles du siège comportent chacun un inclinomètre propre notés respectivement 56, 58, 59, 60 pour l'assise 16, le dossier 18, le repose-tête 19 et le repose-jambes 20. Ces inclinomètres sont chacun propres à déterminer l'inclinaison absolue de l'élément de siège le comportant par rapport à la verticale, c'est-à-dire par rapport à la direction de l'attraction terrestre. Ces inclinomètres sont liés rigidement à l'élément les comportant. Ils sont par exemple formés par des inclinomètres à accéléromètre.

Suivant un premier mode de réalisation, chaque inclinomètre est un inclinomètre mono-axe, mesurant l'inclinaison autour d'un axe perpendiculaire à la direction d'avancement de l'avion et s'étendant parallèlement au sol de l'avion.

Suivant un autre mode de réalisation, l'inclinomètre est un inclinomètre multi-axes, permettant de mesurer l'inclinaison de l'avion autour de plusieurs axes, notamment perpendiculaires deux à deux.

L'usage d'un tel capteur multi-axes permet de connaître l'inclinaison de l'élément de siège, quel que soit l'axe de montage du siège par rapport à la direction d'avancement de l'avion et lors des phases de vol inclinées de l'avion du fait d'un virage.

Chaque inclinomètre est relié à l'unité 38 de gestion du fonctionnement du siège.

Dans l'exemple considéré, l'assise 56 est solidaire du sol de l'appareil et est utilisée comme référence pour le positionnement des autres éléments de siège mobiles.

Suivant un premier mode de réalisation illustré sur la figure 1, les inclinomètres 58, 59, 60 sont chacun reliés dans l'unité 38 à une première borne d'un soustracteur respectivement 68, 69, 70 dont la seconde borne est reliée à la sortie de l'inclinomètre 56. Ainsi, chaque inclinomètre 58, 59, 60, associé au soustracteur correspondant, constitue un moyen de mesure d'une inclinaison relative à référence commune de l'élément de siège sur lequel il est fixé par rapport à l'assise 16. L'assise 16 forme alors la référence commune. Les sorties des soustracteurs 68, 69, 70 sont reliées à l'unité centrale de traitement d'informations 50.

Cette même unité de traitement d'informations 50 est reliée à une base de données 80 comportant l'ensemble des caractéristiques dimensionnelles du siège, et notamment la longueur des éléments de siège et la distance séparant les axes de rotation des différents éléments.

L'unité 50 est propre à mettre en oeuvre en continu un programme permettant de déterminer, à partir de l'inclinaison relative à la référence commune mesurée de chaque élément de siège et des caractéristiques dimensionnelles du siège contenu dans la base 80, les positions par rapport à l'assise 16 de chacun des éléments 18, 19 et 20 de siège articulés.

L'unité 50 est propre à déterminer en particulier la position du point extrême de chaque élément de siège.

Par exemple, dans le cas de l'extrémité supérieure du repose-tête 19, la position $(x_s, y_s)$ du point extrême du repose-tête est donnée par les formules suivantes dans un repère centré sur l'axe de rotation du dossier sur l'assise et dont l'axe x-x est parallèle au sol de l'avion et à l'assise et l'axe y-y est perpendiculaire au sol et à l'assise.

$$x_s = L_{18} \cos (180° - (\theta_{58} - \theta_{56})) + L_{19} \cos (180° - (\theta_{59} - \theta_{56}))$$

$$y_s = L_{18} \sin (180° - (\theta_{58} - \theta_{56})) + L_{19} \sin (180° - (\theta_{59} - \theta_{56}))$$

où

$L_{18}$ = distance entre les axes de rotation du dossier sur l'assise et du repose-tête sur le dossier ;
$L_{19}$ = longueur du repose-tête mesurée depuis l'axe de rotation du repose-tête sur le dossier ;
$\theta_{58}$ = valeur d'inclinaison fournie par l'inclinomètre 58 du dossier ; et
$\theta_{59}$ = valeur d'inclinaison fournie par l'inclinomètre 59 du repose-tête.

Par ailleurs, le repose-jambes 20 et le repose-pieds 22 sont chacun munis d'un accéléromètre respectivement 90, 92, ces deux accéléromètres étant reliés à l'unité de traitement d'informations 50 de l'unité de gestion de fonctionnement du siège par un soustracteur 94.

L'unité 50 de traitement d'informations est propre à recevoir, en continu, l'accélération relative entre le repose-pieds 22 et le repose-jambes 20, obtenue à partir de la différence entre les deux accélérations absolues mesurées par les capteurs 90, 92. Elle est propre également à calculer, par double intégration de l'accélération relative par rapport au temps, la position du repose-pieds 22 par rapport au repose-jambes 20, ce calcul étant fait en considérant la position initiale du repose-jambes comme la dernière position connue de celui-ci avant son déplacement et en considérant la vitesse du repose-pieds par rapport au repose-jambes comme nulle au début du déplacement du repose-pieds par rapport au repose-jambes.

On conçoit qu'avec un tel agencement, l'unité 38 de gestion du siège détermine en permanence la position relative par rapport à une référence commune de chacun des éléments de siège, sans qu'il soit nécessaire de recourir à des capteurs de position intégrés aux actionneurs, évitant ainsi les problèmes d'usure de l'actionneur ainsi que la nécessité d'un calibrage initial, les inclinomètres et/ou capteurs d'accélération étant fixés rigidement de manière précise sur les éléments de sièges, rendant ainsi inutile tout calibrage initial.

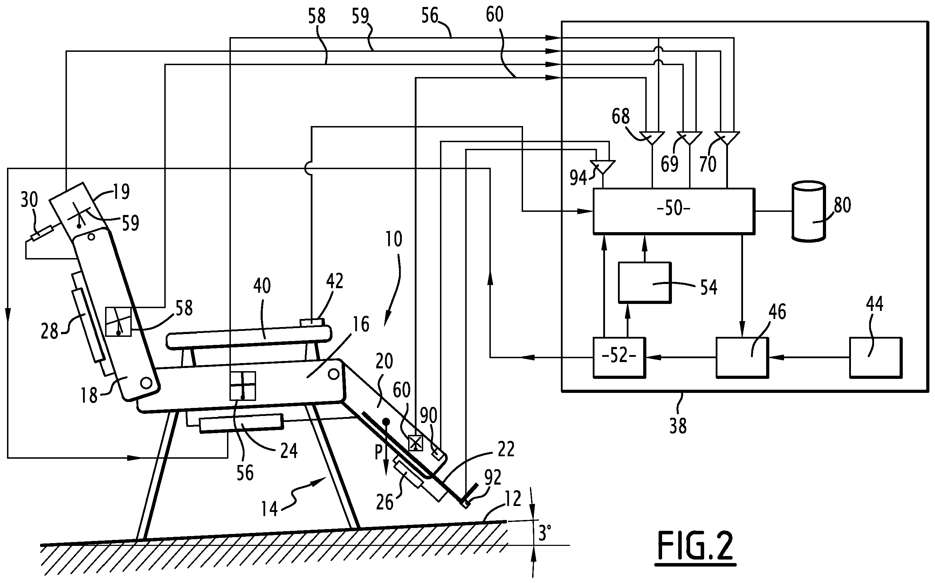

Dans la variante de réalisation de la figure 2, le siège est équipé de moyens de mesure de l'inclinaison relative des éléments successifs du siège les uns par rapport aux autres.

On entend par éléments successifs des éléments qui sont montés mobiles et notamment articulés directement l'un sur l'autre. Ainsi, le repose-tête 19 et le dossier 18 sont deux éléments successifs, les moyens de mesure de l'inclinaison relative entre eux assurent une détermination de l'inclinaison du repose-tête 19 par rapport au dossier 18, lui-même mobile et non pas par rapport à un élément commun, notamment l'assise 16 comme dans le mode de réalisation de la figure 1.

Seules les différences avec le mode de réalisation de la figure 1 seront décrites dans la suite.

En particulier, et comme illustré sur la figure 2, les inclinomètres 58 et 59 sont reliés aux deux entrées d'un soustracteur 69 dont la sortie est reliée à l'unité de traitement d'informations 50. Les inclinomètres 56, 59 et 60 sont reliés comme dans le mode de réalisation de la figure 1 aux soustracteurs 68 et 70.

Dans ce mode de réalisation, les informations de l'unité 50 sont des inclinaisons relatives correspondant au décalage angulaire existant entre deux éléments successifs articulés l'un sur l'autre.

L'unité 50 met en oeuvre un programme permettant à partir des informations contenues dans la base 80 et des inclinaisons relatives mesurées de déterminer la position de chacun des éléments de siège et en particulier la position des points extrêmes. Dans ce mode de réalisation, la position du point extrême supérieur du repose-tête 19 est donnée par

$$x_s = L_{18} \cos (180° - \theta_{58-56}) + L_{19} \cos (180° - \theta_{59-56})$$

$$y_s = L_{18} \sin (180° - \theta_{58-56}) + L_{19} \sin (180° - \theta_{59-56})$$

où

$L_{18}$= distance entre les axes de rotation du dossier sur l'assise et du repose-tête sur le dossier ;
$L_{19}$ = longueur du repose-tête mesurée depuis l'axe de rotation du repose-tête sur le dossier ;
$\theta_{58-56}$ = valeur d'inclinaison relative entre le dossier et l'assise ; et
$\theta_{59-56}$ = valeur d'inclinaison relative entre le repose-tête et l'assise.

En variante, l'assise 16 est dépourvue d'inclinomètre et l'unité 38 de gestion du siège comporte l'inclinomètre 56 propre à déterminer l'inclinaison de l'avion, et donc l'inclinaison de l'assise du siège par rapport à l'horizontale, ceci dans le plan longitudinal médian de l'avion.

Cet inclinomètre est intégré dans la structure du siège 10 ou dans l'unité de gestion 38 du siège, elle-même intégrée dans la structure du siège.

L'inclinomètre est relié à l'unité centrale de gestion par une entrée de réception d'une information représentative de l'inclinaison.

Suivant un mode de réalisation particulier, chaque siège ou chaque paire de sièges est équipé d'un inclinomètre de référence 56 assurant la mesure de l'inclinaison absolue de l'assise 16 propre.

Suivant un autre mode de réalisation, plusieurs sièges sont équipés d'inclinomètres 56 et les unités de gestion dont les sièges sont dépourvus d'inclinomètre sont équipées d'une entrée de réception d'une information d'inclinaison connectée à un inclinomètre présent sur une autre unité centrale de gestion équipée d'un inclinomètre.

Suivant encore une autre variante, plusieurs sièges sont équipés d'inclinomètres 56 et tous les inclinomètres sont reliés à une unité d'estimation de l'inclinaison, qui, à partir des différentes inclinaisons mesurées par les inclinomètres, détermine une inclinaison globale, par exemple par un algorithme de vote majoritaire, ou par un algorithme de moyennage. Cette information d'inclinaison globale est adressée à chaque unité de centrale de traitement d'information des unités de gestion 38.

Suivant encore une autre variante, les sièges sont dépourvus d'inclinomètres et les unités 38 de gestion des sièges ont une entrée de réception d'une information d'inclinaison, connectée au système de gestion de vol de l'appareil, lequel comporte des moyens de détermination de l'inclinaison de l'appareil et est propre à communiquer cette information aux unités de gestion 38.

**Revendications**

1. Siège (10), notamment de véhicule, comportant au moins un premier et un second éléments mobiles (16, 18, 19, 20, 22) l'un par rapport à l'autre et au moins un actionneur (24, 26, 28, 30) assurant un mouvement relatif entre les deux éléments (16, 20), comportant :

   - un capteur de mesure d'une information représentative de la position d'un premier élément de siège par rapport à un second élément de siège ;

   **caractérisé en ce que** ledit capteur comprend un inclinomètre (56, 58, 59, 60) solidarisé au premier élément de siège et **en ce que** ladite information représentative de la position du premier élément de siège est une inclinaison du premier élément de siège.

2. Siège selon la revendication 1, **caractérisé en ce que** le capteur est relié à une unité de traitement d'informations (50) pour fournir une information d'inclinaison relative par rapport à une référence commune.

3. Siège selon la revendication 2, caractérisé en qu'il comporte un inclinomètre de référence (56) et en ce qu'il comporte des moyens de correction de la valeur de chaque inclinomètre à partir de l'inclinaison de référence.

4. Siège selon la revendication 1, **caractérisé en ce que** les premier et second éléments de siège (18, 19) sont successifs dans le siège, le premier élément de siège (19) étant porté et mobile directement par rapport au second élément de siège (18), et **en ce que** les premier et second éléments de siège (18, 19) comportent chacun un inclinomètre, chaque inclinomètre étant relié à une unité de traitement d'informations (50) pour fournir à celle-ci une inclinaison relative du premier élément de siège (19) par rapport au second élément de siège (18).

**5.** Siège selon l'une quelconque des revendications précédentes, **caractérisé en ce qu'**au moins un élément de siège (22), déplaçable par rapport à un autre élément de siège en translation, comporte un accéléromètre (92) propre à mesurer l'accélération relative entre les deux éléments de siège et comporte une unité de traitement d'informations (50) pour le calcul de la position relative des deux éléments de siège par double intégration par rapport au temps de l'accélération mesurée.

**Patentansprüche**

**1.** Sitz (10), insbesondere für ein Fahrzeug, aufweisend mindestens ein erstes und ein zweites zueinander bewegliches Element (16, 18, 19, 20, 22) und mindestens ein Stellglied (24, 26, 28, 30), welches eine relative Bewegung zwischen den beiden Elementen (16, 20) gewährleistet, aufweisend:

- einen Sensor zum Messen einer für die Position eines ersten Sitzelements in Bezug auf ein zweites Sitzelement charakteristische Information;

**dadurch gekennzeichnet, dass** der Sensor einen Neigungsmesser (56, 58, 59, 60) aufweist, welcher mit dem ersten Sitzelement fest verbunden ist, und dass die für die Position des ersten Sitzelements charakteristische Information eine Neigung des ersten Sitzelements ist.

**2.** Sitz nach Anspruch 1, **dadurch gekennzeichnet, dass** der Sensor mit einer Informationsverarbeitungseinheit (50) verbunden ist, um eine Information zur relativen Neigung in Hinsicht auf eine gemeinsame Referenz zu liefern.

**3.** Sitz nach Anspruch 2, **dadurch gekennzeichnet, dass** er einen Referenz-Neigungsmesser (56) aufweist und dass er Mittel zur Korrektur des Wertes von jedem Neigungsmesser ausgehend von der Bezugsneigung aufweist.

**4.** Sitz nach Anspruch 1, **dadurch gekennzeichnet, dass** das erste und zweite Sitzelement (18, 19) in dem Sitz aufeinander folgend sind, wobei das erste Sitzelement (19) in Hinsicht auf das zweite Sitzelement(18) direkt getragen wird und beweglich ist, und dass das erste und zweite Sitzelement (18, 19) jeweils einen Neigungsmesser aufweisen, wobei jeder Neigungsmesser mit einer Informationsverarbeitungseinheit (50) verbunden ist, um dieser eine relative Neigung des ersten Sitzelements (19) in Bezug auf das zweite Sitzelement(18) zu liefern.

**5.** Sitz nach einem der vorhergehenden Ansprüche, **dadurch gekennzeichnet, dass** mindestens ein Sitzelement (22), welches in Bezug auf ein anderes Sitzelement in Translation verlagerbar ist, einen Beschleunigungsmesser (92) aufweist, welcher geeignet ist, die relative Beschleunigung zwischen den beiden Sitzelementen zu messen, und eine Informationsverarbeitungseinheit (50) für die Berechnung der relativen Position der beiden Sitzelemente durch doppelte Integration bezüglich der Zeit der gemessenen Beschleunigung aufweist.

**Claims**

**1.** A Seat, in particular for vehicle, comprising at least one first and one second seat elements (16, 18, 19, 20, 22) movable relatively to each other and at least one actuator 24, 26, 28, 30) ensuring a relative movement between both the first and second movable elements (16, 20), comprising :

- a sensor for measuring a piece of representative information of a position of the first seat element relatively to the second seat element,

**characterized in that** the sensor includes an inclinometer (56, 58, 59, 60) secured to the first seat element, and **in that** the information representative of the position of the first seat element is an inclination of the first seat element.

**2.** Seat according to claim 1, **characterized in that** the sensor is connected to an information processor (50) for providing a piece of relative inclination information relatively to a common reference.

3.  Seat according to claim 2, **characterized in that** it further comprising a reference inclinometer (56) ; and a corrector for correcting the value of each inclinometer from the reference inclination.

4.  Seat according to claim 1, **characterized in that** the first and second seat elements (18, 19) are successive in the seat, the first seat element (19) being borne and directly movable relatively to the second seat element (18), and **in that** the first and second seat elements (18, 19) each including an inclinometer, each inclinometer being connected to an information processer (50) for providing the latter with a relative inclination of the first seat element (19) with respect to the second seat element (18).

5.  Seat according to any of the preceding claims, **characterized in that** at least one of the seat elements (22) displaceable relatively to another of seat elements in translation, includes an accelerometer (92) configured to measure the relative acceleration between both seat elements and includes an information processor (50) for computing the relative position of the two seat elements by double integration over time of the measured relative acceleration.

EP 2 944 508 B1

FIG.1

**FIG.2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013062921 A